Europäisches Patentamt

European Patent Office

Office européen des brevets

(11) Veröffentlichungsnummer: **0 477 949 A1**

(12) **EUROPÄISCHE PATENTANMELDUNG**

(21) Anmeldenummer: **91116467.1**

(22) Anmeldetag: **26.09.91**

(51) Int. Cl.5: **F16L 37/28**, F16L 37/22

(30) Priorität: **26.09.90 DE 4030381**

(43) Veröffentlichungstag der Anmeldung:
**01.04.92 Patentblatt 92/14**

(84) Benannte Vertragsstaaten:
**AT BE CH DE DK ES FR GB GR IT LI LU NL SE**

(71) Anmelder: **EM-Technik GmbH**
**Armaturenbau Industriestrasse 2**
**W-6701 Maxdorf(DE)**

(72) Erfinder: **Wolters, Pierre**
**Amerikalaan 7**
**B-1990 Hoeilaart(BE)**

(74) Vertreter: **Patentanwälte Zellentin & Partner**
**Rubensstrasse 30**
**W-6700 Ludwigshafen(DE)**

(54) **Tropffreie Kupplung.**

(57) Die vorliegende Erfindung betrifft eine tropffreie Kupplung für Flüssigkeiten führende Leitungen. Dabei sind zylindrische Anschlußstücke (3,4) mit innen liegenden Kanälen vorgesehen, die endseitig durch Köpfe (5,6) verschlossen sind. Vor den Köpfen (5,6) sind radiale Bohrungen (7) angeordnet. Die Köpfe (5,6) und die Bohrungen (7) werden von einer Manschette (8) mit einer ringförmigen Ausnehmung (9) überdeckt, die die Verbindung der Kanäle (1,2) in geschlossenem Zustand der Kupplung herstellt, wobei die Manschette (8) beidseits der Kanäle (1,2) auf den Anschlußstücken (3,4) abdichtet. Die Manschette (8) ist zum Öffnen der Kupplung auf ein Anschlußstück (3) zurückschiebbar, wobei diese die Bohrung derart verschließt, daß die vordere Dichtung (12) auf dessen Kopf dichtet. Gleichzeitig ist auf dem anderen Anschlußstück (4) ein Schlitten (20) vorgesehen, der ebenfalls zwei Dichtungen (24,25) aufweist, wobei in offenem Zustand der Kupplung eine Dichtung (24) den Kopf vor der radialen Bohrung (7) und die andere (25) den hinter der Bohrung (7) liegenden Teil des Anschlußstückes (4) abdichtet. Zum Schließen der Kupplung ist der Schlitten (20) auf das Anschlußstück (4) zurückschiebbar.

EP 0 477 949 A1

Die vorliegende Erfindung betrifft eine Kupplung für Flüssigkeiten führende Leitungen, mit deren Hilfe diese aneinander angeschlossen werden können.

Dazu besitzen bekannte Kupplungen zwei miteinander verbindbare Kanäle aufweisende Anschlußstücke auf, die über Schlauchverbinder den Durchfluß bewerkstelligen.

Bei der Führung von toxischen oder aggressiven Flüssigkeiten besteht das Problem, daß beim Öffnen der Kupplung Flüssigkeitsreste an den Anschlußstücken verbleiben und ins Freie gelangen.

Die vorliegende Erfidnung hat sich daher die Aufgabe gestellt, eine Kupplung zu schaffen, mit deren Hilfe das Austreten und Abtropfen von FLüssigkeit nach dem Öffnen sicher vermieden werden kann.

Die Lösung dieser Aufgabe gelingt bei einer zweiteiligen Kupplung für Flüssigkeiten führende Systeme mit Kanälen aufweisenden Anschlußstücken und den Verschluß bewirkenden Kupplungselementen erfindungsgemäß dadurch, daß die Flüssigkeitskanäle runde Querschnitte aufweisen und lückenlos über endseitige, dem gegenüberliegenden Anschlußstück zugekehrte gleiche Mantelflächen aufweisende Köpfe fluchtend aneinanderstoßen und vor den Köpfen angeordnete, die Anschlußstücke durchgreifende Bohrungen besitzen, wobei auf einem Anschlußstück eine verschiebliche Manschette angeordnet ist, die eine ringförmig die Anschlußstücke umfassende Ausnehmung aufweist, deren Länge so bemessen ist, daß sie die Köpfe und die Bohrungen überdeckt und so eine Verbindung zwischen den Kanälen bildet, und die Manschette neben der Ausnehmung Auflagen aufweist, in denen sich Ringdichtungen befinden, die auf dem Außenmantel der Anschlußstücke gleiten, und wobei auf dem der Manschette gegenüberliegenden Anschlußstück ein verschieblicher Schlitten mit Ringdichtungen angeordnet ist, der im geöffneten Zustand der Kupplung dessen Bohrungen überdeckt, und der durch die Manschette betätigbar ist.

Wesentlich ist dabei, daß die Flüssigkeit aus den Kanälen über die Bohrungen nach außen in die Anschlußstücke im Bereich der Bohrungen umgebende, ringförmige Ausnehmung geführt wird und über die hinter dem gegenüberliegenden Kopf über dessen Bohrungen wieder in den entsprechenden Kanal gelangt. Zum Herstellen der Verbindung wird dazu die Manschette soweit über die beiden Köpfe geschoben, daß die Auflagen mit ihren Ringdichtungen jeweils vor und hinter den Bohrungen beidseits der Köpfe liegen. Gleichzeitig wird durch das Einschieben der Manschette der Schlitten in Einschubrichtung bewegt. Die Manschette wird in dieser Stellung festgelegt.

Die Köpfe stoßen lückenlos, z.B. stumpf, aneinander, so daß zwischen diese keine Flüssigkeit gelangen kann.

Beim Öffnen der Kupplung wird die Manschette wieder soweit zurückbewegt, daß eine Auflage vor der Bohrung auf dem Kopf verbleibt und die hintere Auflage auf der Mantelfläche des Anschlußstückes dichtend aufliegt. Mit Hilfe der vorderen Ringdichtung wird dabei Flüssigkeit zurückgestreift. Gleichzeitig mit dem Zurückziehen der Manschette wird auch der ebenfalls zwei beabstandete Ringdichtungen auf, die in geöffnetem Zustand ebenfalls vor der Bohrung auf dem Kopf und hinter der Bohrung auf dem Anschlußstück liegen.

Schlitten und Manschette sind dabei so bemessen, daß sie in geöffnetem Zustand der Kupplung im Bereich der Trennfläche zwischen den Köpfen liegen, des weiteren stoßen diese ebenfalls lückenlos, z.B. stumpf, aneinander, so daß auch hierzwischen keine Flüssigkeit aufgenommen werden kann.

Die Sicherung der Kupplungsteile kann z.B. durch Verschraubung oder mit Hilfe eines Bajonettverschlusses vorgenommen werden.

Wie oben dargestellt, muß der Anschluß zwischen den Köpfen lückenlos, z.B. aus planen aneinanderliegenden Flächen bestehen. Die Flächen können auch ineinandergreifend profiliert sein, um derart die Verschlußteile ineinander zu führen.

Vorzugsweise enthält jedoch ein Kopf ein Sackloch und der gegenüberliegende einen in dieses gleitend passenden Zapfen, wobei die nach außen weisenden Flächenbereiche ebenfalls wieder lückenlos aneinander anliegen müssen. Auf diese Weise entsteht eine sehr exakte Führung der zu verschließenden Teile. Gleichezitig ist dieses Sackloch ins Freie über eine die Kopfbohrung des Kanals nicht tangierende, längs verlaufende Entlüftungsleitung geführt, was gleichzeitig den Vorteil mit sich bringt, daß der Flüssigkeitsdruck des in den Kanälen strömenden Mediums die Köpfe aneinanderdrückt und so den Verschluß und dessen Dichtigkeit erhöht.

Um die Kupplungsteile aneinander festzulegen, wird vorgeschlagen, dem Anschlußstück, das dem die Manschette tragenden gegenüberliegt, eine Muffe anzuordnen, mit dem die Manschette oder ein daran befindliches Element verriegelt, d.h. verschraubt oder durch Bajonetteingriff verschlossen werden kann. Dabei umgreift die Muffe den Schlitten, der zwischen beiden Teilen gleitet.

Der Schlitten ist insbesondere gegen eine Feder verschieblich, die sich an einem rückwärtigen Anschlag des Anschlußstückes abstützt und den Schlitten in geöffnetem Zustand über den Kopf bzw. dessen Bohrungen schiebt, wobei die Endstellung z.B. durch einen an der Muffe angeordneten vorderen Anschlag festgelegt werden kann.

In analoger Weise kann auch das der Manschette zugeordnete Anschlußstück einen mit der Manschette verbundenen und zu dieser beabstandeten Mantel aufweisen, der zur Festlegung der Kupplung mit der Muffe dienen kann, und wobei im Zwischenraum zwischen Mantel und Manschette eine Feder angeordnet werden kann, die sich gegen ein der Muffe zugekehretes Endstück abstützt und die Manschette in geöffnetem Zustand der Kupplung gegen einen Anschlag des Anschlußstükkes drückt.

Zur Vereinfachung der Handhabung der Kupplung wird weiterhin vorgeschlagen, zwischen dem Schlitten und der Manschette Kugelrasten oder dergleichen vorzusehen, die beim Einschieben der Manschette zum Schließen der Kupplung eine Verbindung mit dem Schlitten herstellen und diesen umgekehrt beim Öffnen in die Endstellung mitnehmen und freigeben.

Beim Öffnen der Kupplung wird der Stoß zwischen Schlitten und Manschette über die radiale Bohrung des den Schlitten tragenden Anschlußstückes bewegt.

Um zu vermeiden, daß hierin Flüssigkeitsteilchen eindringen und verbleiben können, ist dieser Stoß ebenfalls als lückenlos, z.B. stumpf, aneinanderliegend auszubilden. Zusätzlich kann dieser noch mit einer Dichtung gesichert werden.

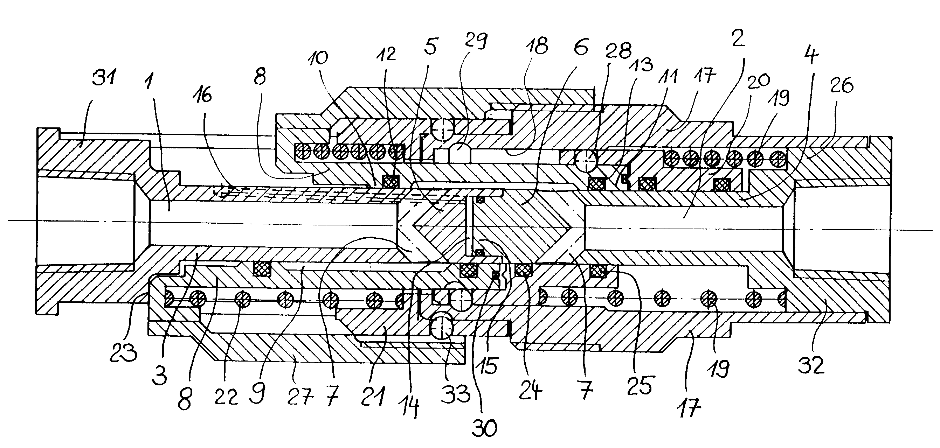

Anhand der beiliegenden Figur wird die vorliegende Erfindung näher beschrieben. Dabei zeigt die obere Hälfte der Darstellung eine geschlossene und die untere eine geöffnete Kupplung.

In der Darstellung sind zwei Anschlußstücke 3, 4 erkennbar, in denen axiale Flüssigkeitskanäle 1, 2 laufen, und die endseitige Anschlüsse 31, 32 für Schlauchverschraubungen aufweisen. Die Anschlußstücke weisen einander zugekehrte Köpfe 5,6 auf, vor denen radiale bzw. - wie dargestellt - schräg verlaufende Bohrungen 7 liegen. Die Köpfe stoßen lückenfrei aneinander, z.B. plan, sie können auch ineinandergreifen und dazu mit einem Sackloch 14 und einem am gegenüberliegenden Kopf 6 angeordneten koaxialen Zapfen 15 versehen sein, wobei über eine anschließende Stufe zwischen den Köpfen 5, 6 eine geschlossene Oberfläche herstellbar ist.

Das Sackloch 14 ist über eine Leitung 16 im Anschlußstück 3 entlüftet, die die Bohrungen 7 nicht tangiert. Die Mantelflächen der Anschlußstücke 3, 4 und der Köpfe 5, 6 fluchten und weisen runde, insbesondere kreisrunde, Querschnitte auf.

Auf einem Anschlußstück 3 ist verschieblich eine Manschette 8 gelagert. Diese weist Auflagen 10, 11 auf, wobei deren Abstand voneinander so bemessen ist, daß in aneinandergekuppeltem Zustand der Anschlußstücke die Auflagen 10, 11 bzw. die in diesen befindlichen Ringdichtungen 12, 13 einmal vor der Bohrung 7 des Kopfes 5 und gegenüberliegend hinter der Bohrung des Kopfes 6 die Mantelflächen nach außen abdichten.

Gleichzeitig ist zwischen den Auflagen 10, 11 eine Ausnehmung 9 vorgesehen, die die Verbindung zwischen den Bohrungen 7 der Köpfe 5, 6 bzw. der Kanäle 1, 2 herstellt.

Die Manschette 8 kann soweit gegen einen Anschlag 23 des Anschlußstückes 3 zurückgeschoben werden, daß deren Ende auf dem Kopf 5 nahe der Trennfuge zum Kopf 6 anliegt.

Die Manschette 8 wirkt mit einem Schlitten 20 zusammen, der auf dem Anschlußstück 4 gleitet und ebenfalls zwei Ringdichtungen 24, 25 aufweist. In geschlossenem Zustand der Kupplung (obere Darstellungshälfte) ruht der Schlitten nahe dem Anschluß 32 bzw. ist von der Manschette dorthin geschoben worden. In geöffnetem Zustand liegt die Vorderkante des Schlittens nahe der Trennfuge zwischen den Köpfen 5, 6 und die Dichtung 24 auf dem Kopf 6 vor dessen Bohrung 7 und die hintere Dichtung 25 analog zur Anordnung der Manschette auf der Mantelfläche des Anschlußstückes 4.

Manschette 8 und Schlitten 20 sind z.B. über Kugelrasten, bestehend aus Betten 29 und Kugeln 28, miteinander verrastbar, wobei die Kugel 28 von der Muffeninnenwandung 18 niedergedrückt wird.

Zusätzlich kann die Bewegung von Manschette 8 und Schlitten 20 durch Federn 19 und 22 unterstützt werden. Um diese nach außen abzudecken und gleichzeitig die Kupplungsteile miteinander verriegeln zu können, ist mit der Manschette 8 ein Mantel 27 verbunden, der die Feder 22 umgreift. Die Feder ist einmal abgestützt am Manschettengrund, der gegen den Anschlag 23 stößt und zum anderen an einem ortsfest verbleibenden Endstück 21, das ebenfalls über Kugelrasten 33 mit einer den Schlitten 20 umgebenden Muffe 17 verbindbar ist.

Diese Muffe 17 ist fest mit dem Anschluß 32 des Anschlußstückes 4 verbunden und umfaßt die Feder 19, wobei der Schlitten 20 zwischen Muffe 17 und Anschlußstück 4 beweglich ist. Die Feder 19 stützt sich dabei gegen einen Anschlag 26 des Anschlusses 32 und wird durch den zurückgeschobenen Schlitten unter Spannung gehalten.

Mantel 27 und Muffe 17 weisen miteinander verschraubbare Gewinde oder Bajonette auf, wodurch die Kupplungsteile aneinander festgelegt werden können.

Der Stoß zwischen der Manschette 8 und dem Schlitten 20 ist in geschlossenem Zustand lückenfrei, er kann mit einer Dichtung 30 versehen sein.

## Bezugszeichenliste

| | |
|---|---|
| 1, 2 | Flüssigkeitskanäle |
| 3, 4 | Anschlußstücke |
| 5, 6 | Köpfe |
| 7 | Bohrungen |
| 8 | Manschette |

| 9 | Ausnehmung |
|---|---|
| 10, 11 | Auflagen |
| 12, 13 | Ringdichtungen |
| 14 | Sackloch |
| 15 | Zapfen |
| 16 | Leitung |
| 17 | Muffe |
| 18 | Muffeninnenwandung |
| 19 | Feder |
| 20 | Schlitten |
| 21 | Endstück |
| 22 | Feder |
| 23 | Anschlag |
| 24, 25 | Ringdichtung |
| 26 | Anschlag |
| 27 | Mantel |
| 28, 29 | Kugelrasten |
| 30 | Dichtung |
| 31, 32 | Anschlüsse |
| 33 | Kugelrasten |

## Patentansprüche

1. Kupplung für Flüssigkeiten führende Leitungen, bestehend aus zwei einen Flüssigkeitskanal aufweisenden Anschlußstücken und jeweils zugeordneten Kupplungselementen, **gekennzeichnet** durch die folgenden Merkmale:

   a) die Flüssigkeitskanäle (1, 2) weisen runde Querschnitte auf und stoßen lückenlos über endseitige, dem gegenüberliegenden Anschlußstück (3, 4) zugekehrte gleiche Mantelflächen aufweisende Köpfe (5, 6) fluchtend aneinander und besitzen vor den Köpfen angeordnete, die Anschlußstücke (3, 4) durchgreifende Bohrungen (7).

   b) auf einem Anschlußstück (3) ist eine verschiebliche Manschette (8) angeordnet, die eine ringförmig die Anschlußstücke (3, 4) umfassende Ausnehmung (9) aufweist, deren Länge so bemessen ist, daß sie die Köpfe (5, 6) und die Bohrungen (7) überdeckt und so eine Verbindung zwischen den Kanälen (1, 2) bildet.

   c) die Manschette (8) weist neben der Ausnehmung (9) Auflagen (10, 11) auf, in denen sich Ringdichtungen (12, 13) befinden, die auf dem Außenmantel der Anschlußstücke (3, 4) gleiten.

   d) auf dem der Manschette (8) gegenüberliegenden Anschlußstück (4) ist ein verschieblicher Schlitten (20) mit Ringdichtungen (24, 25) angeordnet, der im geöffneten Zustand der Kupplung dessen Bohrungen (7) überdeckt, und der durch die Manschette betätigbar ist.

2. Kupplungen nach Anspruch 1, **dadurch gekennzeichnet,** daß ein Kopf (5) ein Sackloch (14) und der gegenüberliegende (6) einen in diesem gleitenden koaxialen Zapfen (15) aufweist, wobei das Sackloch (14) über eine im Mantel des Anschlußstückes (3) angeordnete Leitung (16) ent-lüftbar ist.

3. Kupplung nach den Ansprüchen 1 oder 2, **dadurch gekennzeichnet,** daß die Manschette (8) gegen eine auf dem gegenüberliegenden Anschlußstück (4) angeordnete Muffe (17) verriegelbar ist, die den Schlitten (20) umgreift.

4. Kupplung nach den Ansprüche 1 bis 3, **dadurch gekennzeichnet,** daß der Schlitten (20) gegen eine Feder (19) betätigbar ist, die sich gegen einen Anschlag des Anschlußstückes (4) abstützt.

5. Kupplung nach den Ansprüchen 1 bis 4, **dadurch gekennzeichnet,** daß die Manschette (8) mit einem diese umgebenden Mantel (27) verbunden ist, und ein zwischen diesen gleitendes Endstück (21) aufweist.

6. Kupplung nach Anspruch 5, **dadurch gekennzeichet,** daß das Endstück (21) gegen eine Feder (22) abgestützt ist.

7. Kupplung nach den Ansprüchen 1 bis 6, **dadurch gekennzeichnet,** daß zwischen der Manschette (8) und dem Schlitten (20) Kugelrasten (28, 29) angeordnet sind.

8. Kupplung nach den Ansprüchen 1 bis 7, **dadurch gekennzeichnet**, daß zwischen Manschette (8) und Schlitten (20) eine Dichtung (30) angeordnet ist.

Europäisches
Patentamt

**EUROPÄISCHER RECHERCHENBERICHT**

Nummer der Anmeldung

| EINSCHLÄGIGE DOKUMENTE | | | EP 91116467.1 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
| Y | DE - A - 2 847 901 (WIESE) * Gesamt * | 1,3,4 | F 16 L 37/28 F 16 L 37/22 |
| A |  | 2 |  |
| Y | DE - A - 2 520 669 (FA. CARL KURT WALTHER) * Gesamt * | 1,3,4 |  |
| A |  | 7 |  |
| A | DE - A - 3 819 024 (EM-TECHNIK GMBH) * Gesamt * | 1,2 |  |
| A | DE - A - 3 022 239 (VOSWINKEL KG.) * Gesamt * | 1 |  |

**RECHERCHIERTE SACHGEBIETE (Int Cl.⁵)**

F 16 L 37/00

Der vorliegende Recherchenbericht wurde für alle Patentansprüche erstellt.

| Recherchenort | Abschlußdatum der Recherche | Prüfer |
|---|---|---|
| WIEN | 26-11-1991 | SCHUGANICH |